Europäisches Patentamt

European Patent Office

Office européen des brevets

(11) Publication number: **0 100 211 B1**

(12) **EUROPEAN PATENT SPECIFICATION**

(45) Date of publication of patent specification: **24.05.89**

(51) Int. Cl.⁴: **G 03 G 15/32, H 04 N 1/20**

(21) Application number: **83304238.5**

(22) Date of filing: **21.07.83**

(54) Laser diode printer.

(30) Priority: **22.07.82 US 400638
22.07.82 US 400639**

(43) Date of publication of application:
**08.02.84 Bulletin 84/06**

(45) Publication of the grant of the patent:
**24.05.89 Bulletin 89/21**

(84) Designated Contracting States:
**DE FR GB IT NL SE**

(56) References cited:
**US-A-4 279 472
US-A-4 321 628
US-A-4 323 297**

**FUJITSU SCIENTIFIC & TECHNICAL JOURNAL,
vol. 16, no. 1, March 1980, pages 39-55,
Kawasaki, JP; I. KONDO et al.: "High-speed
laser printer"**

(73) Proprietor: **MINNESOTA MINING AND
MANUFACTURING COMPANY
3M Center, P.O. Box 33427
St. Paul, Minnesota 55133-3427 (US)**

(72) Inventor: **Lee, Charles C. c/o Minnesota Mining
and
Manufacturing Co. 2501 Hudson Road P.O. Box
33427
St. Paul Minnesota 55133 (US)**
Inventor: **Owen, Richard c/o Minnesota Mining
and
Manufacturing Co. 2501 Hudson Road P.O. Box
33427
St. Paul Minnesota 55133 (US)**

(74) Representative: **Baillie, Iain Cameron et al
c/o Ladas & Parry Isartorplatz 5
D-8000 München 2 (DE)**

Courier Press, Leamington Spa, England.

## Description

### Technical Field

This invention relates to an electrophotographic printer, and an imaging device therefor.

### Background Art

The computers ability to process various kinds of data at great speeds demands the conversion, storage and comparison of information in electrical formats. Similarly it must be again converted to human readable formats and thus there is a growing demand for on-line printers to accept the electrical signals and convert it to a readable format at very high printing speeds onto hard copy for the user. The laser has provided a source of radiation with a small spot size which is modulatable very rapidly to produce a latent image pattern on a photoconductive surface of a drum or belt to achieve rapid printout of computer generated information. Such systems utilizing the laser and a scanning system for line generation from a stationary laser are described. The size and cost of laser scanning systems to utilize a He-Ne laser, acousto-optic modulator, collimating lenses, a rotating or oscillating scanner, a parabolic mirror or a flat field fθ lens, a rotating drum to accept the modulated radiation and the associated image developing and transfer stations results in a relatively large expensive piece of hardware which expense exceeds that of the impact printers such that they are not acceptable.

Document US—A—4 279 472, on which the precharacterizing part of the main claims below is based, discloses an imaging device in which a spot of light from a laser is swept or scanned over a receiving surface. The light is condensed by a lens to form a beam, from which it passes to a scanning device then to the receiving surface via a curved field flattening mirror and a plane rectangular mirror.

According to one aspect of the present invention there is provided an imaging device to be used in an electrophotographic printer for printing graphic information on a receiving material comprising a source of monochromatic radiation, condensing lens for collecting the radiation from said source and forming a beam, scanning means for moving the beam across a path traverse to the direction of said beam, a curved reflector positioned along said path for imaging the radiation from said source to a spot on a flat field and a rectangular reflector positioned in the path of said radiation between said curved reflector and said spot for deflecting said moving radiation, characterized by the feature that said rectangular reflector is convexly curved along its length to intercept said radiation and direct the same along a straight line at the focal plane of said spot. Optional features of the imaging device are set out in claims 2 to 5 below. The invention also includes a printer including such an imaging device and as set out in claim 6.

### Brief Description of Drawings

An example embodying present invention will be described in greater detail hereafter with reference to the accompanying drawing wherein:

Figure 1 is a diagrammatic vertical sectional view of a printer constructed according to the present invention;

Figure 2 is a diagrammatic plan view of the imaging device of the printer of Figure 1;

Figure 3 is a vertical sectional view of the scanning device;

Figure 4 is a diagrammatic plan view of a scanning system constructed in accordance with the present invention; and

Figure 5 is a side elevational view of the scanning system constructed in accordance with the present invention.

### Detailed Description

The present invention provides a new imaging device for nonimpact printers for producing human readable or hard copy prints of electronic information or data processed, stored and/or compared electronically. The imaging device utilizes a low power monochromatic light source which light is focused and scanned across a linear focal plane to produce a latent image on a paper sensitized to the light radiated from the source. This latent image can then be developed on-line to deliver to the operator an acceptable copy of the data direct from the source.

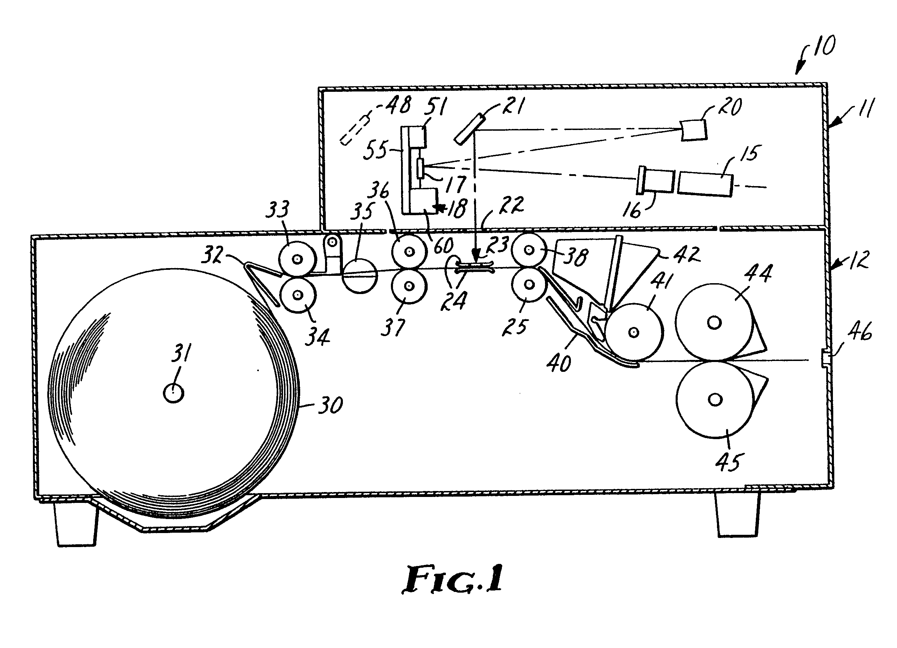

A printer according to the present invention is illustrated in Figure 1 and is generally designated 10. The printer comprises an imaging device 11 and the copy exposing and developing device 12.

The imaging device comprises a scanning system comprising a source of radiation in the form of a laser diode 15 positioned to project radiation therefrom through a focusing objective 16 toward a scanner for moving the beam transversely such as a mirror 17 positioned for oscillation on a galvanometer 18. The mirror 17 is mounted on the galvanometer. Alternatively, a polygon mirror may be used. The galvanometer and mirror provide means for moving the beam of radiation from the lens 16 across a concave, curved or parabolic mirror 20. The mirror 20 reflects the radiation to a second reflector 21 disposed to reflect the radiation through a slit 22 onto a linear focal plane or path 23 defined by a pair of support members 24 in the copy device 12.

The laser diode 15 may be a laser diode from 3 to 15 milliwatts and an example of such a laser diode is one available from Mitsubishi Electric Corporation of Tokyo, Japan, identified as ML3001 which is rated as 3 milliwatts and 830 nanometers with an emitting area of 0.5 by 2.0 μm. Alternatively the laser diode may be from General Optronics Inc. of S. Plainfield, New Jersey, Model GOLS, which is rated at 5 milliwatts or from Hitachi, Ltd. of Tokyo, Japan, Type HLP—1400 having a power of 15 milliwatts. The laser diode is preferaby disposed at an angle of about 4.5 degrees with respect to the plane of the printer. Light from the laser diode is directed through a high resolution objective 16 with a magnification of 10× to 40×, preferably 20× or an 8 mm lens, toward the reflective face of a circular mirror 17. The mirror 17 is mounted on a 1000 cycle per second galvanometer and the mirror and galvanometer rotor are positioned between top and bottom supports for the torsion bar of the galvanometer. The galvanometer 18 is nonlinear but may be of the linear type. The galvanometer is self-resonant with a front surface mirror and an example is the 2S23010 self resonant optical scanner manufactured by General Scanning Inc. of Watertown, Massachusetts.

The curved parabolic mirror 20 is preferably a parabolic mirror having a focal length of 43.9 cm (17.3 inches) and serves, together with the objective 16, to focus the radiation from the laser diode 15 onto an ovate spot having a major diameter of between 25 to 250 μm. The total light path is 67.5 cm (26.6 inches) in length.

The laser diode 15 and the galvanometer 18 are interfaced with a suitable information input device such as a computer to convert electronic information to modulated radiation from the laser diode 15 to impart radiation selectively to the linear focal path 23 to develop a latent image within the sensitized coating on a paper 30 supported in the copy exposing and developing device 12. The device 12 comprises means 31 for supporting a supply roll of the paper 30 which roll comprises a continuous web of photosensitive paper, which sensitive coating comprises a zinc oxide coating which is sensitized to the radiation from the laser diode.

In the device 12 the paper 30 is drawn from the roll and directed across a guide member 32 and through a first pair of feed rollers 33 and 34. The paper is then directed through a cut-off device 35 and then through charging rollers 36 and 37. The paper is next directed over the support members 24 and drive roller 25. The exposed paper is then directed through a guide chute 40 by the roller 25 and a second feed roller 38. As the paper passes down through the chute 40 and is directed past a developer roll 41, toner powder from a supply cartridge 42 is directed onto the selectively charged areas on the sensitized coating. Then the paper is moved past pressure fusing rollers 44 and 45 to fuse the image to the paper and the copy is directed out of the device through a discharge slot 46.

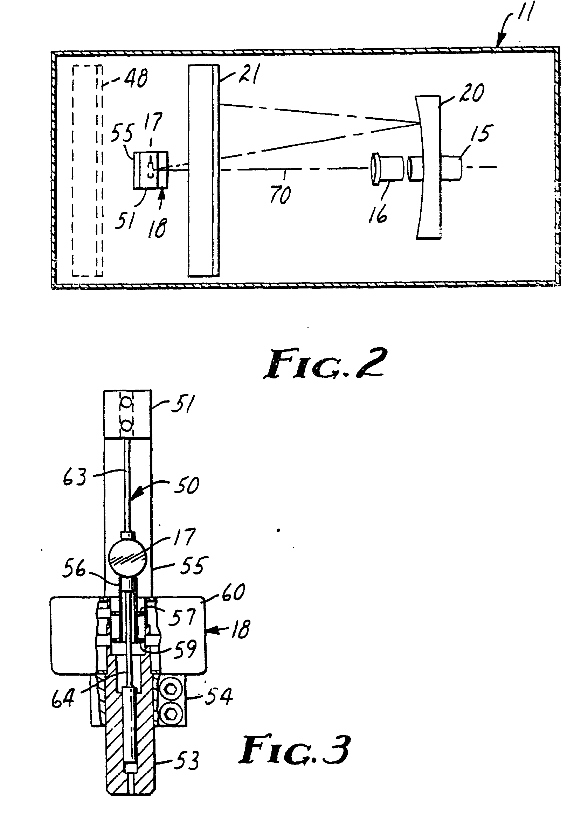

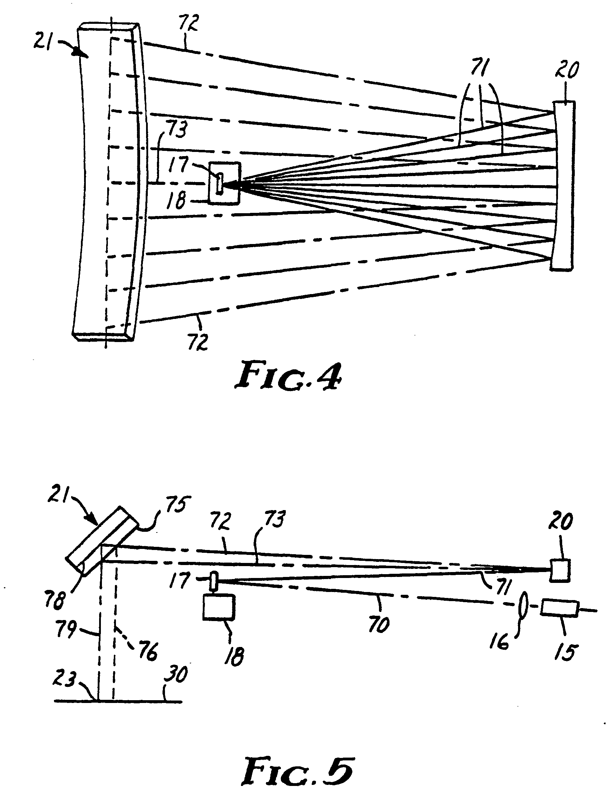

The scanner for the printer is shown in greater detail in Figure 3. The scanner comprises a rod 50 supported at each end in the mounting frame comprising a top bar 51 securing one end, and a support member 53 affixed in a bracket 54 which is fixed by a bar 55 to the top bar 51. The rod 50 has fixed thereto intermediate the ends, the mirror 17 and a sleeve 56. The sleeve has axially spaced rotors 57 and 59 fixed thereon. The sleeve 56 positions the rotors within the stator pole pieces in the stator 60 which is fixed to the support 53.

The rod 50 has two areas 63 and 64 of reduced cross section to obtain the desired resonating characteristics for the mirror. The top and bottom mounting for the rod 50 restricts the cross axis wobble of the mirror 17. The rod 50 is made of steel to provide the torsion effect in the reduced areas.

Alternative arrangements may be provided for the mirror 21 in that, as an imaging device, it may be preferable to have a longer path for the radiation to change the spot size, and the reflector 21 could be disposed further from the curved mirror 20 as illustrated in the dotted line positions of Figure 1 and 2 for the mirror 48.

In operation, when the stationary continuous beam 70 from the source 15 strikes the moving mirror 17 at an angle to the horizontal, the rays 71 reflected toward the center of the parabolic mirror 20 and the rays 72 reflected toward the ends of the mirror 21 are not all in the same plane but are in a conical path. This condition is magnified somewhat for the reflected rays from the parabolic mirror 20 resulting in the center rays, indicated as 73 in Figure 5, being nearly horizontal but lower than the rays 72, indicated in Figure 2, directed toward the ends of the reflector 21. Thus the path or plane defined by the scanning rays 73 and 72 is curved and semiconical and do not fall on a straight line. If the reflector 21 were disposed in a plane represented by the forward edge 75 of reflector 21 then the outer rays 72 would be deflected as indicated by the broken line 76 and the image trace on the path would be concave as viewed from the source 15. By placing a bow or curve in the reflector 21 to bend the ends back to the plane of line 78 of Figure 5 and retain the center of the mirror at the plane of line 75, the rays all fall in the place 79 and the scan line 23 on the receptor 30 is straight.

In a scanning system where the axis of the projected beam 70 from the laser diode 15 is at an angle of 4.5 degrees above the horizontal and, the axis of rotation of the scanner mirror 17 is vertical, the reflected beam from mirror 17 is at an angle of approximately 6.3 degrees from the incident beam. The parabolic mirror 20 has a focal length of 44 cm (17.3 inches) and spaced 20 cm (7.8 inches) from the mirror 17 and 17.8 cm (7 inches) from the surface 75 of reflector 21. The reflector 21 is 10.2 cm (4 inches) from the focal plane 23. Therefore, a deflection of the ends of the plane reflector 21 toward the plane of line 78, of from 0.13 to 0.25 mm (0.005 to 0.010 inch), affords a straightening of the scan line. This deflection defines a curve having a radius of between 50 and 500 cm (20 and 200 inches). This amount of deflection can be accomplished simply by bending a straight mirror which is 20.3 cm (8 inches) long and 1.5 mm (0.060 inches) thick. The bending may be accomplished by clamping the ends and inserting a 0.13 to 0.25 mm (0.005 to 0.010 inch) spacer at the center.

The curved reflector 21 may also be used when scanning an image on the plane 23 with a beam and focussing the image onto a photoelectric cell. Further, the mirror may be formed with an opposite or concave reflecting surface if the center rays 73 of the beam are on a path above the path of the rays 72 on the edges.

## Claims

1. An imaging device to be used in an electrophotographic printer for printing graphic information on a receiving material comprising
a source of monochromatic radiation (15),
a condensing lens (16) for collecting the radiation from said source and forming a beam,
scanning means (17, 18) for moving the beam across a path traverse to the direction of said beam,
a curved reflector (20) positioned along said path for imaging the radiation from said source to a spot on a flat field and
a rectangular reflector (21) positioned in the path of said radiation between said curved reflector (20) and said spot for deflecting said moving radiation, characterized by the feature that said rectangular reflector (21) is convexly curved along its length to intercept said radiation and direct the same along a straight line (23) at the focal plane of said spot.

2. An imaging device according to claim 1, characterized by the feature that said curved reflector (20) is a rectangular sector of a parabolic surface positioned for receiving the beam from the scanning means.

3. An imaging device according to claim 1 or 2, characterized by the feature that said source comprises a laser diode (15).

4. An imaging device according to claim 1, 2 or 3, characterized by the feature that the scanning means comprises a mirror (17) driven by a galvanometer (18).

5. An imaging device according to claim 4, characterized by the feature that the mirror (17) is mounted on the galvanometer for oscillation about an axis parallel to the reflective surface of the mirror.

6. A printer for on-line printing of electronic data comprising an imaging device according to any preceding claim and a copy exposing and developing device (12), the copy exposing and developing device (12) including means (25, 38) for advancing a length of paper (30) having a photoconductive coating sensitive to the radiation across the flat field, means (42, 41) for developing a latent image imparted to said photoconductive coating, and means for fixing the image of said paper (30).

## Patentansprüche

1. Bilderzeugungseinrichtung zur Verwendung in einem elektrophotographischen Drucker zum Drucken von graphischer Information auf einem Aufnahmematerial mit
einer Quelle monochromatischer Strahlung (15),
einer Kondensorlinse (16) zum Empfang der von der Quelle kommenden Strahlung und zum Erzeugen eines Strahls,
einer Abtasteinrichtung (17, 18) zum Bewegen des Strahls auf einer quer zur Richtung des Strahls verlaufenden Bahn,
einem längs der genannten Bahn angeordneten, gekrümmten Reflektor (20) zum Abbilden der von der Quelle kommenden Strahlung auf einem Fleck auf einem ebenen Feld, und
einem in der Bahn der Strahlung zwischen dem gekrümmten Reflektor (20) und dem genannten Flecken angeordneten, rechteckigen Reflektor (21) zum Ablenken der sich bewegenden Strahlung, dadurch gekennzeichnet, daß der rechteckige Reflektor (21) in seiner Längsrichtung derart konvex gekrümmt ist, daß er die Strahlung abfängt und sie in der Brennebene des genannten Flekkens längs einer Geraden (23) führt.

2. Bilderzeugungseinrichtung nach Anspruch 1, dadurch gekennzeichnet, daß der gekrümmte Reflektor (20) ein rechteckiger Sektor einer parabelförmigen Fläche ist, die so angeordnet ist, daß sie den von der Abtasteinrichtung kommenden den Strahl empfängt.

3. Bilderzeugungseinrichtung nach Anspruch 1 oder 2, dadurch gekennzeichnet, daß die genannte Quelle eine Laserdiode aufweist.

4. Bilderzeugungseinrichtung nach Anspruch 1, 2 oder 3, dadurch gekennzeichnet, daß die Abtasteinrichtung einen von einem Galvanometer (18) angetriebenen Spiegel (17) aufweist.

5. Bilderzeugungseinrichtung nach Anspruch 4, dadurch gekennzeichnet, daß der Spiegel (17) auf dem Galvanometer derart montiert ist, daß er um eine zur reflexionsfähigen Fläche des Spiegels parallele Achse schwingen kann.

6. Drucker zum On-Line-Ausdrucken von elektronischen Daten mit einer Bilderzeugungseinrichtung nach einem der vorhergehenden Ansprüche und einer Kopienbelichtungs- und -entwicklungseinrichtung (12), die Mittel (25, 38) zum Vorschub einer Papierlänge (30) besitzt, die mit einem Photowiderstandsüberzug versehen ist, der für die Strahlung auf dem ebenen Feld empfindlich ist, ferner eine Einrichtung (42, 41) zum Entwickeln des auf dem Photowiderstandsüberzug erzeugten, latenten Bildes und eine Einrichtung zum Fixieren des Bildes auf dem Papier (30).

## Revendications

1. Dispositif de formation d'image utilisable dans une imprimante électrophotographique pour l'impression d'informations graphiques sur une matière réceptrice, comprenant:
une source de rayonnement monochromatique (15),
une lentille de condensation (16) pour collecter le rayonnement de ladite source et former un faisceau,
des moyens de balayage (17, 18) pour déplacer le faisceau sur un chemin transversal à la direction dudit faisceau,
un réflecteur courbe (20) placé sur ledit chemin pour former une image du rayonnement de ladite source en un point lumineux sur un champ plat, et

un réflecteur rectangulaire (21) placé sur le chemin dudit rayonnement, entre ledit réflecteur courbe (20) et ledit point lumineux, pour dévier ledit rayonnement en déplacement, caractérisé en ce que ledit réflecteur rectangulaire (21) présente une courbure convexe sur sa longueur, pour intercepter ledit rayonnement et le diriger le long d'une ligne droite (23) à l'endroit du plan focal dudit point lumineux.

2. Dispositif de formation d'image suivant la revendication 1, caractérisé en ce que ledit réflecteur courbe (20) est un secteur rectangulaire d'une surface parabolique disposée de manière à recevoir le faisceau venant des moyens de balayage.

3. Dispositif de formation d'image suivant la revendication 1 ou 2, caractérisé en ce que ladite source comprend une diode laser (15).

4. Dispositif de formation d'image suivant la revendication 1, 2 ou 3, caractérisé en ce que les moyens de balayage comprennent un miroir (17) entraîné par un galvanomètre (18).

5. Dispositif de formation d'image suivant la revendication 4, caractérisé en ce que le miroir (17) est monté sur le galvanomètre pour osciller autour d'un axe parallèle à la surface réfléchissante du miroir.

6. Imprimante pour l'impression en ligne de données électroniques, comprenant un dispositif de formation d'image suivant l'une quelconque des revendications précédentes et un dispositif (12) d'exposition et de développement de copie, le dispositif (12) d'exposition et de développement de copie comprenant des moyens (25, 38) pour faire avancer une longueur de papier (30), portant un revêtement photoconducteur sensible au rayonnement, sur le champ plat, des moyens (42, 41) pour développer une image latente donnée audit revêtement photoconducteur, et des moyens pour fixer l'image dudit papier (30).

FIG.1

EP 0 100 211 B1

*FIG.2*

*FIG.3*

FIG.4

FIG.5

3